# EUROPÄISCHE PATENTSCHRIFT

(11) **EP 2 652 405 B1**
(45) Veröffentlichungstag und Bekanntmachung des Hinweises auf die Patenterteilung: **24.08.2016**
(21) Anmeldenummer: 11797217.4
(22) Anmeldetag: 09.12.2011
(51) Int. Cl.: F24C 7/08, A47L 15/42, B60K 37/06, D06F 39/00, G05G 1/08, H03K 17/965

(54) **BEDIENVORRICHTUNG FÜR EIN HAUSGERÄT SOWIE HAUSGERÄT, INSBESONDERE BACKOFEN, MIT EINER BEDIENVORRICHTUNG**
OPERATOR CONTROL APPARATUS FOR A DOMESTIC APPLIANCE, AND DOMESTIC APPLIANCE, IN PARTICULAR BAKING OVEN, HAVING AN OPERATOR CONTROL APPARATUS
DISPOSITIF DE COMMANDE POUR APPAREIL MÉNAGER ET APPAREIL MÉNAGER, EN PARTICULIER FOUR, DOTÉ D'UN DISPOSITIF DE COMMANDE

(30) Priorität: 16.12.2010 DE 102010063190
(43) Veröffentlichungstag der Anmeldung: 23.10.2013
(73) Patentinhaber: BSH Hausgeräte GmbH, 81739 München (DE)
(72) Erfinder: LUDWIG, Jörn, 80634 München (DE); NÜSSLER, Gerhard, 80798 München (DE); RIESER, Frank, 82194 Gröbenzell (DE); TESSERAUX, Dominik, 14548 Schwielowsee (DE); THIELEN, Heiko, 82152 Planegg (DE)
(86) Internationale Anmeldenummer: PCT/EP2011/072335
(87) Internationale Veröffentlichungsnummer: WO 2012/080128

(56) Entgegenhaltungen:
- EP-A1- 0 611 151
- EP-A2- 0 570 670
- EP-A2- 0 844 325
- EP-A2- 1 278 016
- WO-A2-2009/047437
- DE-A1-102008 012 602
- US-A1- 2004 148 972
- US-A1- 2005 276 448
- US-B1- 7 489 303

## Beschreibung

Die Erfindung betrifft eine Bedienvorrichtung für ein Hausgerät, mit einem elektronischen Anzeigefeld und einem Bedienelement, welches zur Einstellung von Betriebsbedingungen des Hausgeräts relativ zum Anzeigefeld bewegbar ist.

Es sind Bedienvorrichtungen für ein Hausgerät bekannt, die digitale Anzeigefelder aufweisen, in denen Text und/oder Buchstaben angezeigt werden. Darüber hinaus können auch Zahlen oder Symbole angezeigt werden. Derartige Displays sind üblicherweise als eigenständige Komponenten in einer Bedienvorrichtung vorhanden. Separat und beabstandet dazu können Bedienelemente vorgesehen sein, die beispielsweise als Drehwähler oder Drücktasten oder Kippschalter ausgebildet sind. Darüber hinaus sind berührsensitive Bedienfelder bekannt, wie sie beispielsweise durch Touchscreens oder dergleichen realisiert sind.

Aus dem Dokument EP 0 844 325 A2 ist ein Betätigungsknopf bekannt, bei welchem eine berührungslose Betätigungsübertragung in Form eines magnetoresistiven Schalters zwischen dem frontseitigen Betätigungsknopf und einer rückseitigen Steuereinheit sowie zwischen beiden ein Anzeigefeld vorgesehen sind.

Eine Bedienblende für eine Waschmaschine ist beispielsweise aus dem Dokument US 2004/0148972 A1 bekannt.

Eine Bedienvorrichtung für ein Infotainmentsystem eines Kraftfahrzeugs ist zum Beispiel aus dem Dokument WO 2009/047437 A2 bekannt. Weitere Bedieneinrichtungen sind aus den Dokumenten DE 10 2008 012 602 A1, US 7 489 303 B1. EP 1 278 016 A2, EP 0 570 670 A2, EP 0 611 151 A1 sowie US 2005/0276448 A1 bekannt.

Es ist Aufgabe der vorliegenden Erfindung, eine Bedienvorrichtung zu schaffen, welche die mechanisch stabile Ausgestaltung und Betätigungsmöglichkeit eines manuell bewegbaren Bedienelements gewährleistet, wobei darüber hinaus die Bedienvorrichtung im Hinblick auf die Flächenausmaße kompakt und minimiert ausgestaltet werden soll und ferner die Informationspräsentation auf dem elektronischen Anzeigefeld bei Betätigung des Bedienelements leicht wahrnehmbar erfolgen soll.

Diese Aufgabe wird durch eine Bedienvorrichtung, weiche die Merkmale nach Anspruch 1 aufweist, und ein Hausgerät, welches die Merkmale nach Anspruch 12 aufweist, gelöst.

Eine erfindungsgemäße Bedienvorrichtung für ein Hausgerät umfasst ein elektronisches Anzeigefeld und ein Bedienelement, welches zur Einstellung von Betriebsbedingungen des Hausgeräts relativ zum Anzeigefeld bewegbar ist. Das Bedienelement ist zumindest bereichsweise innerhalb dem Anzeigefeld angeordnet. Dies bedeutet, dass im Hinblick auf die Ausmaße des elektronischen Anzeigefelds das Bedienelement - mit seinen frontseitigen Ausmaßen zumindest bereichsweise hineinragend in. die Fläche des Anzeigefelds positioniert ist. Mit einem elektronischen Anzeigefeld wird insbesondere ein Display verstanden, auf dem Informationen dynamisch wechselnd anzeigbar sind. Dies können Informationen umfassend Buchstaben und/oder Zahlen und/oder Symbole und/oder Bilder sein.

Das Bedienelement ist somit im Hinblick auf seine Anordnung und Flächenpositionierung zumindest bereichsweise eingebettet in der Fläche des Anzeigefelds angeordnet.

Mit der zumindest teilweisen Anordnung des Bedienelements innerhalb der Flächenausmaße des Anzeigefelds ist insbesondere auch die Ausführung darunter zu verstehen, bei der die Kontur des Rands des Bedienelements im Bereich, in dem es dem Anzeigefeld zugewandt ist, an die Kontur des Flächenrands des Anzeigefelds formverlaufsmäßig angepasst ist und diese Konturenverläufe praktisch direkt aneinander angrenzen.

Vorzugsweise ist das Bedienelement zumindest bereichsweise mit seinen Flächenausmaßen direkt vor dem Anzeigefeld angeordnet und somit das Anzeigefeld zumindest praktisch teilweise verdeckend angeordnet. Insbesondere werden jedoch keine derartigen Feldbereiche des Anzeigefelds verdeckt, auf denen dann Informationen dargestellt werden sollen.

Durch eine Ausgestaltung einer Bedienvorrichtung gemäß der Erfindung kann eine sehr kompakte und flächenmäßig minimierte Bedienvorrichtung geschaffen werden. Diesbezüglich war es bisher nicht möglich, elektronische Anzeigefelder mit derartigen manuell bewegbaren Bedienelementen zu kombinieren, um diese gerade im Hinblick auf die genannte spezifische Anordnung und Positionierung zueinander anzubringen. Neben einer kompakten Ausgestaltung der Bedienvorrichtung kann somit auch in besonders vorteilhafter Weise das Bedienelement relativ zum Anzeigefeld bewegt werden und die dann auf dem Anzeigefeld befindlichen Informationen unmittelbar benachbart zum Bedienelement angezeigt werden. Dadurch sind diese Informationen für einen Nutzer auch intuitiv einfach und sicher wahrnehmbar. Denn betätigt er das Bedienelement ist automatisch seine Blickrichtung auf das Bedienelement gerichtet und die aufgrund der positionellen Anordnung zum elektronischen Anzeigefeld auch in unmittelbarer Nähe zum Bedienelement angezeigten Informationen auf dem Anzeigefeld sofort automatisch wahrnehmbar und diese sind im Blickfeld.

Vorzugsweise ist vorgesehen, dass sich das Bedienelement mit seinem sich in die Fläche des Anzeigefelds hinein erstreckenden Flächenbereich vor dem Anzeigefeld befindet. Bei der Betrachtung der Bedienvorrichtung von vorne ist somit das Bedienelement bereichsweise vor dem Anzeigefeld positioniert, sodass es dieses quasi abdeckt.

Es ist vorgesehen, dass das Anzeigefeld mit einer für das Licht des Anzeigefelds durchlässigen Abdeckung abgedeckt ist und das Bedienelement an der Abdeckung angeordnet ist. Zum einen kann dadurch die Elektronik des Anzeigefelds und das tatsächliche Display vor Beschädigungen oder Verschmutzung geschützt werden und darüber hinaus dient die Abdeckung zusätzlich als mechanischer Träger.

Vorzugsweise ist vorgesehen, dass das Bedienelement in einem beispielsweise aus Metall oder Kunststoff ausgebildeten Halteprofil angeordnet ist, welches an der Abdeckung angeordnet ist und welches zwischen der Abdeckung und dem Bedienelement angeordnet ist. Diese Ausführung gewährleistet eine stabile Anordnung des Bedienelements.

Es ist vorgesehen, dass die Vorderseite der Abdeckung nach hinten versetzt zu einer Vorderseite einer an die Abdeckung anschließenden und die Anzeigeeinheit zumindest teilweise umrandenden Frontwand einer Bedienblende angeordnet ist. Durch diese bei einer die Bedieneinrichtung von vorne betrachteten Blickrichtung ist somit quasi die Abdeckung nach hinten und in die Bedienvorrichtung hineinversetzt angeordnet. Zum einen kann dadurch auch ein gewisser Schutz der Frontseite der Abdeckung erzielt werden und andererseits durch die nach vorne versetzte Frontwand auch eine gewisse Blendschutzwirkung für die anzuzeigenden Informationen, die durch die Abdeckung hindurch gesehen werden können, erzielt werden.

Vorzugsweise ist die Frontwand zumindest an seiner Außenseite beziehungsweise Vorderseite ebenfalls aus Metall ausgebildet. Dadurch kann insbesondere im Einklang mit der metallisch ausgestalteten Vorderseite des Bedienelements ein optisch gleicher Eindruck vermittelt werden. Nicht zuletzt ist durch die Ausgestaltung der Frontwand aus Metall auch eine verbesserte mechanische Stabilität erzielbar.

Vorzugsweise ist vorgesehen, dass die Frontseite des Bedienelements bündig mit der Vorderseite der Frontwand ist. Dies gewährleistet eine besonders bauraumminimierte Ausgestaltung und das Bedienelement ist somit quasi teilweise eingebettet in die Frontwand, wodurch es geschützt positioniert ist.

Es ist vorgesehen, dass in dem durch den Versatz der Vorderseite der Abdeckung und der Vorderseite der Frontwand ausgebildeten Freiraum Auflageelemente mit Auflageflächen ausgebildet sind. Diese Auflageelemente mit den Auflageflächen sind zur Betätigungsunterstützung beziehungsweise zur Betätigungsführung von berührsensitiven Bedienstellen, die in dem Anzeigefeld angeordnet sind, ausgebildet. Vorzugsweise sind die Bedienstellen im unteren Bereich des Anzeigefelds benachbart zu den Auflageelementen ausgebildet. Durch diese Auflageelemente wird somit quasi eine Aufstützmöglichkeit für eine Fingerkuppe ermöglicht und somit ein besonders präzises und zielführendes Betätigen und Berühren dieser berührsensitiven Bedienstellen ermöglicht. Gerade dann, wenn eine große Vielzahl derartiger Bedienstellen, die größenmäßig relativ klein dimensioniert sind, kann durch diese Ausgestaltung mit den Auflageelementen eine besonders fehlerfreie beziehungsweise fehlerarme Betätigung der Bedienvorrichtung gewährleistet werden.

In dem diese Auflageelemente in einem unteren Freiraumbereich angeordnet sind, ist das Aufliegen eines Fingers besonders gestützt und geführt und die dann mit der Fingerfrontseite zu berührende Außenseite der Abdeckung an der Stelle der berührsensitiven Bedienstelle ist dadurch besonders begünstigt.

Insbesondere weisen diese Auflageelemente mit den Auflageflächen außer dieser mechanischen Auflagemöglichkeit keine weitere Funktionalität, insbesondere keine Funktionalität im Hinblick auf eine Betriebsbedingungseinstellung des Hausgeräts auf.

Vorzugsweise ist bei einer derartigen Ausgestaltung somit das Anzeigefeld quasi als Anzeige- und Bedienfeld ausgebildet, da es sowohl Bereiche umfasst, in denen Informationen angezeigt werden, als auch die berührsensitiven Bedienstellen umfasst.

Besonders vorteilhaft ist in diesem Zusammenhang, dass die Auflageflächen der Auflageelemente quasi praktisch an die berührsensitiven Bedienstellen beziehungsweise an die berührbaren Flächenbereiche der Abdeckung angrenzen, sodass nahezu automatisch bei einem Auflegen einer Fingerkuppe auf einen Auflagenflächenbereich die berührsensitive Bedienstelle an der Abdeckung berührt wird.

Vorzugsweise ist vorgesehen, dass eine Auflagefläche eines Auflageelements optisch erkennbar begrenzt ist und eine Fläche einer berührsensitiven Bedienstelle benachbart zu einem zugeordneten Auflageelement zumindest in der Breite an die Breite der Auflagefläche angepasst ist. Dadurch wird für einen Nutzer sehr einfach erkennbar die jeweilige Zone gekennzeichnet, sodass er im Hinblick auf das Berühren der jeweiligen Bedienstelle über die gekennzeichnete Auflagefläche automatisch die richtige Position des Fingers erreicht.

Zumindest eine der berührsensitiven Bedienstellen kann funktional auch anderweitig ausgebildet sein und beispielsweise auch als drückbare Taste ausgebildet sein.

Vorzugsweise ist vorgesehen, dass eine Auflagefläche eines Auflageelements von der Frontwand zur Abdeckung hin schräg ansteigend angeordnet ist. Die gesamte Funktionalität der Auflage einer Fingerkuppe einerseits und der zusätzlich erreichten Berührung einer berührsensitiven Bedienstelle an der Abdeckung andererseits wird dadurch begünstigt. Des Weiteren wird dadurch gerade dann, wenn eine entsprechende Kenntlichmachung der Grenzen der Auflageflächen vorgesehen ist, diese Auflageposition für einen Nutzer noch einfacher erkannt.

Vorzugsweise ist vorgesehen, dass in horizontaler Richtung betrachtet beidseits des Bedienelements jeweils zumindest ein Auflageelement ausgebildet ist.

Insbesondere ist vorgesehen, dass das Bedienelement quasi zentral mittig angeordnet ist und im Hinblick auf die Breite des Anzeigefelds quasi mittig positioniert ist. Die vorab angesprochene Nutzerfreundlichkeit im Hinblick auf die Wahrnehmbarkeit der angezeigten Informationen, die dann immer bei Betätigen des Bedienelements auch im Blickfeld des Nutzers auf der Anzeigeeinheit angezeigt werden, ist dadurch begünstigt.

Vorzugsweise erstreckt sich das Bedienelement soweit in den Flächenbereich des Anzeigefelds hinein, dass die benachbart angeordneten berührsensitiven Bedienstellen in ihrer Höhe innerhalb der Höhe liegen, mit der sich das Bedienelement in die Flächenausmaße des Anzeigefelds hineinerstreckt. Auch dadurch wird eine sehr kompakte und dennoch sehr übersichtliche und intuitiv bedienbare Vorrichtung geschaffen.

Besonders vorteilhaft ist es, dass das Bedienelement formmäßig als Scheibe ausgebildet ist. Im Hinblick auf die geringe Dicke, insbesondere das Einbetten in die Frontwand und das Hineinerstrecken in die Flächenausmaße des Anzeigefelds kann somit ein drehbares Bedienelement geschaffen werden, dessen vorzugsweise ebene Vorderseite durch einen Finger leicht und dennoch zielsicher berührt und geführt werden kann, sodass die Scheibe diesbezüglich auch leicht gedreht und dennoch in ihrer Position präzise orientiert werden kann. Die durch diese Drehbewegung bewirkte Einstellung kann dadurch sehr zielsicher erfolgen.

Vorzugsweise erstreckt sich die Scheibe maximal bis zur Hälfte ihres Durchmessers in ein rechteckiges Anzeigefeld.

Vorzugsweise ist vorgesehen, dass das Bedienelement zumindest bereichsweise magnetisch ausgebildet ist. Gerade in Wechselwirkung mit entsprechend angebrachten Sensoren kann dann die durch die Bewegung hervorgerufene Relativposition detektiert werden und die damit verbundene und zugeordnete Betriebsbedingungseinstellung erfasst und durchgeführt werden. Diesbezüglich weist die Bedienvorrichtung eine Steuereinheit auf.

Insbesondere ist die Fronseite des Bedienelements, welche vorzugsweise kreisförmig ausgebildet ist, aus einem lichtundurchlässigen Material.

Insbesondere ist vorgesehen, dass das Bedienelement als Drehwähler ausgebildet ist und so flachbauend in der Bedienvorrichtung angeordnet ist, dass es insbesondere nur an seiner Frontseite durch einen Nutzer zur Ausführung der Drehbewegung sinnvoll berührbar und bewegbar ist.

Des Weiteren betrifft die Erfindung ein Hausgerät, insbesondere einen Backofen, mit einer erfindungsgemäßen Bedienvorrichtung oder einer vorteilhaften Ausgestaltung davon.

Vorzugsweise ist vorgesehen, dass an zumindest einem Feldbereich des Anzeigefelds die anzuzeigende Information abhängig von der Bewegung des Bedienelements veränderbar ist. Die Dynamik der Informationspräsentation kann somit durch das Bedienelement selbst verändert werden. Dies ist eine hervorzuhebende Funktionalität.

Vorzugsweise ist vorgesehen, dass eine anzuzeigende Menüoberfläche auf dem Anzeigefeld um das Bedienelement herum anzeigbar ist. Die Menüoberfläche kann übergeordnete Informationsordner umfassen, deren Anwählen durch Drehen des Bedienelements ausgewählt werden können und dann die darin enthaltenen Informationen durch weitere Betätigung des Bedienelements oder anderer Komponenten detaillierter anzeigbar sind. Grundsätzlich kann die Menüoberfläche jedoch auch die damit verbundene Endinformation aufweisen und somit keine Ordnerstruktur darstellen.

Vorzugsweise ist die Menüoberfläche dynamisch veränderbar. Auch dies kann insbesondere durch das Bedienelement bewirkt werden. Die Möglichkeit der Informationspräsentation auf dem Anzeigefeld ist dadurch multipel erweitert und kann aufgrund der Ausgestaltung der Menüoberfläche und der dynamischen Veränderbarkeit sehr nutzerfreundlich und leicht nachvollziehbar gestaltet werden.

Vorzugsweise sind Menüinhalte abhängig von der Stellung, insbesondere der Drehstellung, des Bedienelements aktivierbar.

Vorzugsweise umfasst das Aktivieren eines Menüinhalts ein Aufleuchten, insbesondere in einer anderen Lichtfarbe als nicht aktivierte Menüinhalte, von Menüinhalten. Das Aktivieren kann zusätzlich anstatt dazu jedoch auch eine Änderung der Schriftgröße und/oder eine Änderung der Zahlengröße und/oder eine Änderung der Symbolgröße der angezeigten Informationen umfassen. Auch hier kann somit für einen Nutzer einfach und sehr schnell wahrnehmbar die Auswahl signalisiert werden.

Vorzugsweise ist vorgesehen, dass eine Vorderseite des Bedienelements zumindest bereichsweise als Feldbereich des Anzeigefelds ausgebildet ist. Dadurch kann das in dem Anzeigefeld angeordnete Bedienelement selbst zur Vergrößerung des Anzeigefelds beitragen. Gerade dann, wenn das Bedienelement als Drehwähler ausgebildet ist und diese nicht als volle Kreisscheibe sondern beispielsweise nur als Ring ausgebildet ist, kann der von dem Ring umschlossene Flächenbereich zur Anzeige von Informationen verwendet werden. Insbesondere kann dieser Bereich dann auch ein elektronisches Anzeigefeld sein.

Insbesondere ist vorgesehen, dass eine Vorderseite des Bedienelements zumindest bereichsweise als elektronischer Anzeige-Feldbereich ausgebildet ist, auf dem Informationen dargestellt werden können.

Vorzugsweise ist vorgesehen, dass ein von dem Bedienelement umschlossener Flächenbereich ein berührsensitives Bedienfeld aufweist, mit welchem durch Berühren Betriebsbedingungen des Hausgeräts einstellbar sind. Insbesondere wenn das Bedienelement ein Ring ist, kann der Kreisbereich im Inneren des Rings als berührsensitives Bedienfeld ausgebildet sein.

Vorzugsweise ist vorgesehen, dass mittels dem Bedienelement oder einem weiteren Bedienteil die Informationstiefe eines auf dem Anzeigefeld anzuzeigenden Menüinhalts einstellbar ist.

So kann vorgesehen sein, dass bei komplexen Bedieninhalten die Anzeigevielfalt durch Trennung in eine auf Tastendruck aufrufbare Funktionsmenüwelt, in der beispielsweise Grundbetriebsarten und Programme des Hausgeräts und dergleichen angezeigt werden können, und eine Optionsmenüwelt, in welcher zusätzliche wählbare Optionen, wie beispielsweise eine Schnellaufheizung bei einem Backofen oder dergleichen, erhöht werden kann.

Es kann auch vorgesehen sein, dass der Nutzer individuell die Menüoberfläche und/oder die Menüinhalte gestaltet, indem er dies mit dem betätigen des Bedienelements durchführt und insbesondere die nutzerspezifizierte Ausgestaltung dann auch abspeichert. Es kann auch vorgesehen sein, dass dabei individuelle Inhalte zusammengefasst werden oder neu gruppiert werden.

Vorzugsweise ist vorgesehen, dass separat zum Bedienelement zumindest ein Bedienteil vorgesehen ist, welches das Ein- und Ausschalten des Hausgeräts ermöglicht. Es kann vorgesehen sein, dass dieses Bedienteil ein berührsensitives Bedienfeld ist. Dieses berührsensitive Bedienfeld kann in dem elektronischen Anzeigefeld angeordnet sein. In einer alternativen Ausgestaltung kann es jedoch auch außerhalb der Ausmaße dieses elektronischen Anzeigefelds ausgebildet sein.

Vorzugsweise werden anzuzeigende Inhalte in quasi digitaler Form auf dem elektronischen Anzeigefeld um ein insbesondere zentral im Anzeigefeld angeordnetes und relativ zum Anzeigefeld im Hinblick auf die Betriebsbedingungseinstellung des Hausgeräts bewegbaren Bedienelements herum als Displayinhalt angezeigt. Insbesondere werden beim Drehen des Bedienelements die angezeigten Werte und/oder Informationen im Hinblick auf die Anwahl signalisierend gekennzeichnet. Insbesondere durch Bestätigen oder eine vorgebbare Wartezeit nach dem Anwählen oder dem Wechseln in eine andere Funktion wird der eingestellte Wert übernommen.

Durch das zumindest eine weitere Bedienteil können diesem kontextbezogene, benötigte Funktionen oder Inhalte zugeordnet werden und dadurch die erforderliche Anzahl an zusätzlichen Bedienteilen so gering wie möglich gehalten werden.

Wesentliche Vorteile der Bedienvorrichtung liegen darin, dass durch die Kombination aus quasi einem manuell bewegbaren Bedienelement und einer elektronischen Anzeigeeinheit komplexe Menütiefen in sehr einfacher und übersichtlicher Form dargestellt werden können und durch die positionelle Anordnung der genannten beiden Komponenten eine sehr nutzerfreundliche Bedienbarkeit und sehr zuverlässige und sichere Wahrnehmbarkeit der Informationen erreicht werden können. Die sehr kompakte Ausgestaltung der Bedienvorrichtung ist dabei nicht zu vergessen.

Die Umfeldanzeige bietet durch die zeitgleiche Anzeige von vielen Einstellwerten den größtmöglichen Überblick bei der Einstellung von Parameterwerten im Bezug auf die nutzbare Displayhöhe und ist somit einer Listendarstellung im herkömmlichen Sinne überlegen.

Die kontextbezogene Darstellung von Optionen erlaubt es, nur die jeweils notwendigen Wahlmöglichkeiten anzuzeigen und somit die visuelle Komplexität der Benutzerschnittstelle gering zu halten. Das gleiche gilt auch für die klare Trennung in Funktionsmenüinhalte und Optionsmenüinhalte, welche den jeweiligen Fokus auf Standardoperationen oder nachgelagerte Zusatzoptionen lenkt.

Es kann auch vorgesehen sein, dass anstelle des Halteprofils das scheibenförmige Bedienelement auf einer herkömmlichen Achse geführt und gehalten ist und entsprechend gedreht werden kann und somit lediglich nur dieses scheibenförmige Bedienelement vor dem Anzeigefeld und der Abdeckung angeordnet ist. Eine zusätzliche Anbringung eines derartigen Halteprofils, insbesondere an der Abdeckung, ist dann nicht vorgesehen.

Darüber hinaus kann vorgesehen sein, dass die Bedienvorrichtung eine oder mehrere Lichtquellen aufweist, durch welche das Bedienelement beleuchtbar ist. Diesbezüglich kann die Frontseite beleuchtbar sein oder jedoch auch unmittelbar benachbarte Zonen in dem Anzeigefeld beleuchtet werden, durch die dann auch das Bedienelement zumindest an einer mantelförmigen Seitenwand beleuchtbar ist.

Vorzugsweise ist das Anzeigefeld ein TFT (Thin Film Technology) -Display.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
Fig. 1 eine schematische perspektivische Darstellung eines Ausführungsbeispiels eines erfindungsgemäßen Backofens; und
Fig. 2 eine perspektivische Darstellung eines Ausführungsbeispiels einer erfindungsgemäßen Bedienvorrichtung als Teilausschnitt.

In den Figuren werden gleiche oder funktionsgleiche Elemente mit den gleichen Bezugszeichen versehen.

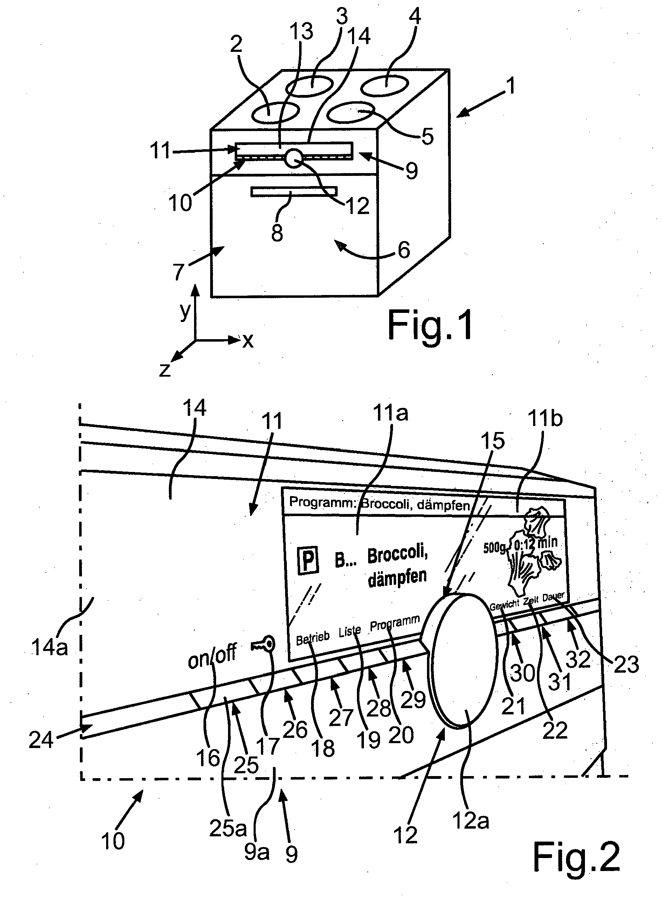

In Fig. 1 ist in einer schematischen Darstellung ein Backofen 1 gezeigt, der Kochzonen 2, 3, 4 und 5 aufweist. Sowohl die Anzahl als auch die Position der Kochzonen 2 bis 5 ist lediglich beispielhaft. Darüber hinaus ist ein Garraum 6 vorgesehen, der durch eine Tür 7 verschließbar ist, die an ihrer Außenseite einen Griff 8 aufweist. Im Ausführungsbeispiel oberhalb der Tür 7 angeordnet ist eine Bedienblende 9 mit einer Bedienvorrichtung 10. Auch hier ist die Position der Bedienvorrichtung 10 lediglich beispielhaft. Sie kann in der Bedienblende 9 jedoch auch direkt in der Tür 7 angeordnet sein.

Die Bedienvorrichtung 10 umfasst ein elektronisches Anzeigefeld 11, welches als TFT-Display ausgebildet ist. Darauf können Informationen, wie Buchstaben und/oder Zahlen und/oder Symbole dynamisch veränderbar angezeigt werden. Darüber hinaus umfasst die Bedienvorrichtung 10 ein Bedienelement 12, welches als manuell betätigbares Bedienelement ausgebildet ist. Es ist somit zur Betriebsbedienungseinstellung des Backofens 1 relativ zum Anzeigefeld 11 bewegbar. Im Ausführungsbeispiel ist das Bedienelement 12 formmäßig als flache Scheibe ausgebildet, die drehbar ist, und das Anzeigefeld 11 ist rechteckig.

Wie aus der Darstellung in Fig. 1 zu erkennen ist, erstreckt sich das Bedienelement 12 mit seiner Kreisscheibenform flächenmäßig in den Flächenbereich 13 des Anzeigefelds 11 hinein, wobei dieser Flächenbereich 13 Rechteckform aufweist und die Fläche durch die Kontur 14 begrenzt ist. Das Bedienelement 12 erstreckt sich etwa bis zur Hälfte in den rechteckigen Flächenbereich 13 hinein, wobei für die Bemessung des Hineinerstreckens die untere horizontale Begrenzungskante des Flächenbereichs 13 dient.

Das Bedienelement 12 ist somit zumindest bereichsweise innerhalb der Fläche 13 des Anzeigefelds 11 angeordnet. Im Ausführungsbeispiel ist dabei vorgesehen, dass sich das Bedienelement 12 bei frontseitiger Betrachtung des Backofens 1 flächenmäßig bereichsweise vor dem Anzeigefeld 11 befindet.

Dies bedeutet hier, dass das rechteckige Anzeigefeld 11 teilweise durch die kreisscheibenförmige Ausgestaltung und dem daraus resultierenden Flächenbereich des Bedienelements 12 verdeckt ist.

In Fig. 2 ist einer perspektivischen Darstellung ein vergrößerter Teilausschnitt der Bedienvorrichtung 10 gezeigt. Es ist zu erkennen, dass vor dem Anzeigefeld eine das Anzeigefeld 11 abdeckende Abdeckung 14 ausgebildet ist, welche im Ausführungsbeispiel eine Glasplatte ist. Sie ist für das von dem Anzeigefeld 11 erzeugte Licht durchlässig.

Das Bedienelement 12 ist auch vor dieser Abdeckung 14 angeordnet. Darüber hinaus ist vorgesehen, dass das Bedienelement 12 in einem Halteprofil 15 angeordnet und gehalten ist. Dieses Halteprofil 15 ist an der Abdeckung 14 angeordnet und insbesondere zumindest bereichsweise zwischen der Abdeckung 14 und dem Bedienelement 12 angeordnet.

Des Weiteren ist zu erkennen, dass das Anzeigefeld 11 Anzeigebereiche 11a aufweist, in denen Buchstaben und/oder Zahlen und/oder Symbole angezeigt werden. Diese können sich dynamisch ändern, und insbesondere eine Änderung abhängig von einer Betätigung des Bedienelements 12 erfolgen.

Darüber hinaus ist ein Bereich 11 b auf dem Anzeigefeld 11 vorgesehen, auf dem zumindest auch Bildinformationen oder Videos dargestellt werden können. Zusätzlich können jedoch auch weitere Informationen in Textform und/oder in Zahlen und/oder Symbolen dargestellt werden.

Das Anzeigefeld 11 ist im Ausführungsbeispiel als Anzeige- und Bedienfeld ausgebildet. Dies bedeutet, dass neben Bereichen, in denen Informationen angezeigt werden, auch berührsensitive Bedienstellen vorgesehen sind.

Diese sind im Ausführungsbeispiel in einem unteren Drittel der Höhe des Anzeigefelds 11 und somit auch der Abdeckung 14 ausgebildet. Im Ausführungsbeispiel sind dies die berührsensitiven Bedienstellen 16, 17, 18, 19, 20 sowie auf der gegenüberliegenden Seite des im Hinblick auf die Breite des Anzeigefelds 11 mittig positionierten Bedienelements 12 die berührsensitiven Bedienstellen 21, 22 und zumindest 23.

Wie zu erkennen ist, sind die berührsensitiven Bedienstellen 16 bis 23 durch Text und/oder Symbole auch optisch gekennzeichnet, sodass der Nutzer die jeweilig zugeordneten und hinterlegten Funktionalitäten erkennen kann.

Bei der Bedienvorrichtung 10 ist vorgesehen, dass eine Vorderseite 14a der Abdeckung 14 gegenüber einer Vorderseite 9a der Bedienblende 9 nach hinten versetzt ist. Dies bedeutet, dass in z-Richtung betrachtet (Koordinatensystem diesbezüglich der Fig. 1 gezeichnet) die Vorderseite 14a weiter hinten angeordnet ist als die Vorderseite 9a.

In diesem Zusammenhang ist somit zwischen der Vorderseite 14a und der Vorderseite 9a ein Freiraum 24 ausgebildet. In diesem Freiraum sind im Ausführungsbeispiel Auflageelemente 25, 26, 27, 28, 29, 30, 31 und 32 ausgebildet. Diese sind von der Vorderseite 9a zur Vorderseite 14a hin schräg nach oben verlaufend orientiert und weisen dazu entsprechende Auflageflächen auf. Der Übersichtlichkeit dienend ist lediglich eine Auflagefläche 25a des Auflageelements 25 mit einem Bezugszeichen versehen.

Wie des Weiteren zu erkennen ist, ist jedes Auflageelement 25 bis 32 und somit auch die Auflagefläche 25a in seiner Breite optisch kenntlich gemacht begrenzt. Dadurch kann ein Nutzer sehr einfach erkennen, wo sich dieser Flächenbereich erstreckt. Diese Breite der Auflagefläche 25a ist so bemessen, dass er der Breite eines direkt benachbart angeordneten berührsensitiven Bedienbereichs beziehungsweise einer berührsensitive Bedienstelle 16 bis 23 entspricht.

Zur Betriebsbedingungseinstellung des Backofens 1 über eine der berührsensitiven Bedienstellen 16 bis 23 ist die Anordnung und die Ausgestaltung der Ausmaße dieser berührsensitiven Bedienstellen 16 bis 23 einerseits und der Auflageelemente 25 bis 32 andererseits so gegeben, dass der Nutzer mit einem Finger und insbesondere einer vorderen Fingerkuppe einerseits auf der Auflagefläche 25a aufsitzt, und aufgrund deren Schmalheit in z-Richtung jedoch automatisch auch die Frontseite 14a berührt und somit die zugeordnete berührsensitive Bedienstelle 16 bis 23 berührt.

Die Auflageelemente 25 bis 32 weisen hier keine weitere Funktionalität auf und dienen quasi nur als Auflage und Abstützung für den Finger. Durch ihre Ausgestaltung und Position vermitteln sie jedoch den Eindruck von aktiv betätigbaren Bedientasten, so dass der Nutzer zur Betriebseinstellung automatisch dazu verleitet wird, den Finger auf die gewünschte Auflagefläche zu legen.

Wie im Ausführungsbeispiel zu erkennen ist, ist eine Vorderseite 12a des Bedienelements 12 im Wesentlichen bündig mit der Vorderseite 9a. Es kann auch vorgesehen sein, dass die Vorderseite 12a minimal gegenüber der Vorderseite 9a nach vorne übersteht, beispielsweise kleiner 1 mm diesbezüglich nach vorne übersteht.

Im Ausführungsbeispiel ist sowohl die Vorderseite 12a als auch die Vorderseite 9a aus Metall ausgebildet.

Durch Drehen des Bedienelements 12 können Funktionsteileinheiten des Backofens 1 ausgewählt und/oder Betriebsparameter dieser Funktionsteileinheiten eingestellt werden. Als Funktionsteileinheiten können beispielsweise die Kochzonen 2 bis 5 oder der Garraum 6 bzw. die zugehörigen Heizkörper ausgewählt werden. Betriebsparameter dieser Funktionsteileinheiten sind die Heizstufen der jeweils zugeordneten Heizkörper.

Wie zu erkennen ist, ist im Ausführungsbeispiel vorgesehen, dass die Bedienblende 9 das Anzeigefeld 11 rahmenartig umgibt.

Gemäß der Darstellung in Fig. 2 ist zu erkennen, dass die Belegung der berührsensitiven Bedienstellen 16 bis 23 beispielsweise durch eine Bedruckung hinter der als Glasplatte ausgebildeten Abdeckung 14 oder durch Softkeys in dem Display dargestellt sind. Die eigentliche Elektronik des Anzeigefelds 11 befindet sich hinter der Abdeckung 14.

### Bezugszeichenliste

- 1: Backofen
- 2 bis 5: Kochzonen
- 6: Garraum
- 7: Tür
- 8: Griff
- 9: Bedienblende
- 9a: Vorderseite
- 10: Bedienvorrichtung
- 11: Anzeigefeld
- 11a: Anzeigebereich
- 11b: Bereich
- 12: Bedienelement
- 12a: Frontseite
- 13: Flächenbereich
- 14: Abdeckung
- 14a: Vorderseite
- 15: Halteprofil
- 16 bis 23: Bedienstellen
- 24: Freiraum
- 25 bis 32: Auflageelemente
- 25a: Auflagefläche

## Patentansprüche

1. Bedienvorrichtung für ein Hausgerät (1), mit einem elektronischen Anzeigefeld (11) und einem Bedienelement (12), welches zur Einstellung von Betriebsbedingungen des Hausgeräts (1) relativ zum Anzeigefeld (11) bewegbar ist, wobei das Bedienelement (12) zumindest bereichsweise innerhalb der Fläche (13) des Anzeigefelds (11) angeordnet ist, wobei das Anzeigefeld (11) mit einer für das Licht des Anzeigefelds (11) durchlässigen Abdeckung (14) abgedeckt ist und das Bedienelement (12) an der Abdeckung (14) angeordnet ist, und wobei die Vorderseite (14a) der Abdeckung (14) nach hinten versetzt zu einer Vorderseite (9a) einer an die Abdeckung (14) anschließenden und das Anzeigefeld (11) zumindest teilweise umrandenden Bedienblende (9) angeordnet ist, **dadurch gekennzeichnet, dass** in einem durch den Versätz der Vorderseite (14a) der Abdeckung (14) und der Vorderseite (9a) der Bedienblende (9) ausgebildeten Freiraum (24) Auflageelemente (25 bis 32) mit Auflageflächen (25a) zur Betätigungsunterstützung von berührsensitiven Bedienstellen (16 bis 23), die in dem Anzeigefeld (11) angeordnet sind, ausgebildet sind, wobei die Bedienstellen (16 bis 23) im unteren Bereich des Anzeigefelds (11) benachbart zu den Auflageelementen (25 bis 32) ausgebildet sind.

2. Bedienvorrichtung nach Anspruch 1, **dadurch gekennzeichnet, dass** sich das Bedienelement (12) mit seinem sich in die Fläche (13) des Anzeigefelds (11) hinein erstreckenden Flächenbereich vor dem Anzeigefeld (11) befindet.

3. Bedienvorrichtung nach Anspruch 1 oder 2, **dadurch gekennzeichnet, dass** das. Bedienelement (12) in einem Halteprofil (15) angeordnet ist, welches an der Abdeckung (14) angeordnet ist und welches insbesondere bereichsweise zwischen der Abdeckung (14) und dem Bedienelement (12) angeordnet ist.

4. Bedienvorrichtung nach einem der vorhergehenden Ansprüche, **dadurch gekennzeichnet, dass** die Frontseite (12ä) des Bedienelements (12) bündig mit der Vorderseite (9a) der Bedienblende (9) ist oder kleiner 1 mm nach vorne gegenüber der Vorderseite (9a) übersteht.

5. Bedienvorrichtung nach einem der vorhergehenden Ansprüche, **dadurch gekennzeichnet, dass** eine Auflagefläche (25a) eines Auflageelements (25 bis 32) optisch erkennbar begrenzt ist und eine Fläche einer berührsensitiven Bedienstelle (16 bis 23) benachbart zu einem zugeordneten Auflageelement (25 bis 32) zumindest in der Breite an die Breite der Auflagefläche (25a) angepasst ist.

6. Bedienvorrichtung nach einem der vorhergehenden Ansprüche, **dadurch gekennzeichnet, dass** eine Auflagefläche (25a) von der Frontwand zur Abdeckung (14) hin schräg ansteigend angeordnet ist.

7. Bedienvorrichtung nach einem der vorhergehenden Ansprüche, **dadurch gekennzeichnet, dass** in horizontaler Richtung beidseits des Bedienelements (12) jeweils zumindest ein Auflageelement (25 bis 32) ausgebildet ist.

8. Bedienvorrichtung nach einem der vorhergehenden Ansprüche, **dadurch gekennzeichnet, dass** die Frontseite (12a) des Bedienelements (12) aus Metall ist und/oder die Vorderseite (9a) der Bedienblende (9) zumindest bereichsweise aus Metall ist.

9. Bedienvorrichtung nach einem der vorhergehenden Ansprüche, **dadurch gekennzeichnet, dass** das Bedienelement (12) formmäßig eine Scheibe ist.

10. Bedienvorrichtung nach Anspruch 9, **dadurch gekennzeichnet, dass** das Bedienelement (12) zumindest bereichsweise magnetisch ausgebildet ist.

11. Bedienvorrichtung nach einem der vorhergehenden Ansprüche, **dadurch gekennzeichnet, dass** das Bedienelement (12) als Drehwähler ausgebildet ist.

12. Hausgerät, insbesondere Backofen (1), mit einer Bedienvorrichtung (10) nach einem der vorhergehenden Ansprüche.

## Claims

1. Operator control apparatus for a domestic appliance (1), having an electronic display panel (11) and an operator control element (12) which can be moved relative to the display panel (11) in order to adjust operating conditions of the domestic appliance (1), wherein the operator control element (12) is arranged at least partially within the surface (13) of the display panel (11), wherein the display panel (11) is covered by a cover (14) which is permeable in respect of the light of the display panel (11) and the operator control element (12) is arranged on the cover (14), and wherein the front side (14a) of the cover (14) is arranged offset to the rear from a front side (9a) of an operator control panel (9) adjoining the cover (14) and bordering the display panel (11) at least partially, **characterised in that** bearing elements (25 to 32) with bearing surfaces (25a) for supporting the actuation of touch-sensitive operator control points (16 to 23) which are arranged in the display panel (11) are formed in a free space (24) formed by the offset of the front side (14a) of the cover (14) and the front side (9a) of the operator control panel (9), wherein the operator control points (16 to 23) are formed in the lower region of the display panel (11) adjacent to the bearing elements (25 to 32).

2. Operator control apparatus according to claim 1, **characterised in that** the operator control element (12) with its surface area extending into the surface (13) of the display panel (11) is located in front of the display panel (11).

3. Operator control apparatus according to claim 1 or 2, **characterised in that** the operator control element (12) is arranged in a holding profile (15) which is arranged on the cover (14) and which in particular is partially arranged between the cover (14) and the operator control element (12).

4. Operator control apparatus according to one of the preceding claims, **characterised in that** the front side (12a) of the operator control element (12) is flush with the front side (9a) of the operator control panel (9) or protrudes less than 1 mm forwards compared to the front side (9a).

5. Operator control apparatus according to one of the preceding claims, **characterised in that** a bearing surface (25a) of a bearing element (25 to 32) is optically recognizably bounded and a surface of a touch-sensitive operator control point (16 to 23) adjacent to an associated support element (25 to 32) is adapted at least in terms of width to the width of the bearing surface (25a).

6. Operator control apparatus according to one of the preceding claims, **characterised in that** a bearing surface (25a) is arranged obliquely ascending from the front wall to the cover (14).

7. Operator control apparatus according to one of the preceding claims, **characterised in that** in each case at least one support element (25 to 32) is formed in the horizontal direction on both sides of the operator control element (12).

8. Operator control apparatus according to one of the preceding claims, **characterised in that** the front side (12a) of the operator control element (12) is made of metal and/or the front side (9a) of the operator control panel (9) is made at least partially of metal.

9. Operator control apparatus according to one of the preceding claims, **characterised in that** in terms of shape the operator control element (12) is a disk.

10. Operator control apparatus according to claim 9, **characterised in that** the operator control element (12) is designed to be at least partially magnetic.

11. Operator control apparatus according to one of the preceding claims, **characterised in that** the operator control element (12) is designed as a rotary selector.

12. Domestic appliance, in particular a baking oven (1), having an operator control apparatus (10) according to one of the preceding claims.

## Revendications

1. Dispositif de commande pour un appareil ménager (1), avec une zone d'affichage électronique (11) et un élément de commande (12), qui est mobile pour le réglage de conditions de fonctionnement de l'appareil ménager (1) relativement à la zone d'affichage (11), dans lequel l'élément de commande (12) est disposé au moins par endroits à l'intérieur de la surface (13) de la zone d'affichage (11), dans lequel la zone d'affichage (11) est recouverte par une coiffe (14) perméable à la lumière de la zone d'affichage (11) et l'élément de commande (12) est disposé au niveau de la coiffe (14), et dans lequel la face avant (14a) de la coiffe (14) est décalée vers l'arrière par rapport à une face avant (9a) d'un panneau de commande (9) se raccordant à la coiffe (14) et bordant au moins partiellement la zone d'affichage (11), **caractérisé en ce que** dans un espace libre (24) configuré par le biais du décalage de la face avant (14a) de la coiffe (14) et de la face avant (9a) du panneau de commande (9) des éléments de support (25 à 32) avec des surfaces de support (25a) sont configurés pour soutenir l'actionnement de positions de commande sensibles au toucher (16 à 23) qui sont disposées dans la zone d'affichage (11), dans lequel les positions de commande (16 à 23) sont configurées dans la zone inférieure de la zone d'affichage (11) de manière adjacente aux éléments de support (25 à 32).

2. Dispositif de commande selon la revendication 1, **caractérisé en ce que** l'élément de commande (12) se trouve devant la zone d'affichage (11) avec sa zone de surface s'étendant dans la surface (13) de la zone d'affichage (11).

3. Dispositif de commande selon la revendication 1 ou 2, **caractérisé en ce que** l'élément de commande (12) est disposé dans un profilé de retenue (15), qui est disposé au niveau de la coiffe (14) et qui est disposé tout particulièrement par endroits entre la coiffe (14) et l'élément de commande (12).

4. Dispositif de commande selon l'une des revendications précédentes, **caractérisé en ce que** la face avant (12a) de l'élément de commande (12) affleure avec la face avant (9a) du panneau de commande (9) ou est dépasse de moins de 1 mm vers l'avant par rapport à la face avant (9a).

5. Dispositif de commande selon l'une des revendications précédentes, **caractérisé en ce qu'**une surface de support (25a) d'un élément de support (25 à 32) est délimitée de manière à être reconnaissable optiquement et une surface d'une position de commande sensible au toucher (16 à 23) est adaptée de manière adjacente à un élément de support (25 à 32) associé au moins dans la largeur à la largeur de la surface de support (25a).

6. Dispositif de commande selon l'une des revendications précédentes, **caractérisé en ce qu'**une surface de support (25a) est disposée de manière inclinée et montante de la paroi avant jusqu'à la coiffe (14).

7. Dispositif de commande selon l'une des revendications précédentes, **caractérisé en ce que** dans la direction horizontale des deux côtés de l'élément de commande (12) est configuré respectivement au moins un élément de support (25 à 32).

8. Dispositif de commande selon l'une des revendications précédentes, **caractérisé en ce que** la face avant (12a) de l'élément de commande (12) est en métal et/ou la face avant (9a) du panneau de commande (9) est au moins par endroits en métal.

9. Dispositif de commande selon l'une des revendications précédentes, **caractérisé en ce que** l'élément de commande (12) a la forme d'un disque.

10. Dispositif de commande selon la revendication 9, **caractérisé en ce que** l'élément de commande (12) est configuré au moins par endroits de manière magnétique.

11. Dispositif de commande selon l'une des revendications précédentes, **caractérisé en ce que** l'élément de commande (12) est configuré en tant que commutateur rotatif.

12. Appareil ménager, tout particulièrement four (1), avec un dispositif de commande (10) selon l'une des revendications précédentes.
